# EUROPÄISCHE PATENTSCHRIFT

(11) **EP 1 176 875 B1**
(45) Veröffentlichungstag und Bekanntmachung des Hinweises auf die Patenterteilung: **19.01.2005**
(21) Anmeldenummer: 00920689.7
(22) Anmeldetag: 12.04.2000
(51) Int. Cl.: A23K 1/16, A23K 1/18

(54) **VERWENDUNG VON KREATIN ALS FUTTERZUSATZ**
USE OF CREATINE AS A FEED SUBSTITUTE
UTILISATION DE CREATINE COMME ELEMENT NUTRITIF ACCESSOIRE D'ALIMENTS POUR ANIMAUX

(30) Priorität: 08.05.1999 EP 99109145
(43) Veröffentlichungstag der Anmeldung: 06.02.2002
(73) Patentinhaber: DSM Fine Chemicals Austria Nfg GmbH & Co KG, 4021 Linz (AT); UFA AG, 3360 Herzogenbuchsee (CH)
(72) Erfinder: WALLIMANN, Theo, CH-8963 Kindhausen (CH); PFIRTER, Hans, Peter, CH-8607 Seegräben (CH)
(74) Vertreter: Lindinger, Ingrid
(86) Internationale Anmeldenummer: PCT/EP2000/003245
(87) Internationale Veröffentlichungsnummer: WO 2000/067590

(56) Entgegenhaltungen:
- WO-A-98/06278
- WO-A-99/00122
- DE-A- 19 836 450
- FR-A- 2 561 871
- GB-A- 2 300 103
- US-A- 3 988 483
- US-A- 5 876 780
- DATABASE WPI Section Ch, Week 199725 Derwent Publications Ltd., London, GB; Class D13, AN 1997-272800 XP002118538 & CN 1 102 062 A (LIU S), 3. Mai 1995 (1995-05-03)
- C. ROVEE-COLLIER ET AL.: "Diet selection by chicks" DEVELOPMENTAL PSYCHOBIOLOGY, Bd. 29, Nr. 3, 1996, Seiten 241-272, XP002118537

## Beschreibung

Über Jahrzehnte war die Verwendung von Tiermehl, das aus hygienisierten und getrockneten Schlachtabfällen, sowie aus umgestandenen Tieren inklusive Rindern und anderen Wiederkäuern besteht, in Futterrationen für landwirtschaftliche Nutztiere allgemeine Praxis. Nach dem Auftreten von BSE's (Bovine Spongiform Encephalopathies) bei Rindern wurde jedoch ein Fütterungsverbot von Tiermehl für Wiederkäuer erlassen. Bei Schweinen und anderen Tieren sind vergleichbare Krankheitssymptome als TSE's (Transmissible Spongiform Encephalophaties) bekannt. Für Schweine und Geflügel wird Tiermehl dennoch weiterhin als unbedenklich erachtet. Die Befürchtung, dass diese Tiere aber doch Empfänger und symptomlose Überträger von BSE- oder TSE-spezifischen Strukturen sein könnten, und die von ihnen stammenden Nahrungsmittel unerwünschte Auswirkungen auf den Menschen haben könnten, hat zu einem weitverbreiteten Ausschluss von Tiermehl auch aus Futterrationen für Schweine und Geflügel geführt.

Bei rein vegetabiler Fütterungsweise bestehen jedoch Hinweise, wonach bei Zuchtund Masttieren infolge fehlender, in tierischen Geweben vorhandener Inhaltsstoffe Nachteile in Kauf zu nehmen sind.

Auch bei normal zubereiteten, beispielsweise gekochten, Schlachtabfällen und prozessiertem Tierfutter ist der, verglichen mit Frischfleisch, relativ geringe bis fehlende Kreatin-Gehalt von Nachteil. Insbesondere bei Dosenfutter, wie beispielsweise für Katzen und Hunde, wird durch das Aufkochen der Zutaten bei der Futterherstellung der im Frischfleisch vorhandene Kreatinanteil zerstört.

Kreatin (Creatine) ist eine schon seit mehr als hundert Jahren bekannte, sowohl bei Menschen als auch bei Tieren körpereigene, Substanz, die zum Teil vom Körper selbst hergestellt oder über die Nahrung aufgenommen wird.

Die Bedeutung von Kreatin im Stoffwechsel liegt auf zellulärer Ebene, indem es eine kurzzeitige Energiereserve bildet und am Energietransport beteiligt ist (Wallimann et al., Biochem. J. 281, 21-40;1992). Die Einnahme von Kreatin führt beim Menschen bei entsprechendem Training zu verbesserter Leistungsfähigkeit der Muskulatur. Auch bei Hunden, insbesondere bei Rennhunden, Jagdhunden u.ä., wurde dieser Effekt bereits festgestellt, wie etwa in GB 2 300 103 beschrieben wird.

Weiters werden dem Futter für die Fütterung von Zucht- und Masttieren immer weniger antimikrobielle Leistungsförderer ("Antibiotika") als Futterzusatz zugesetzt, durch deren Wegfall es jedoch zusätzlich zu einer stärkeren Sensibilisierung der Tiere gegenüber Belastungen des Verdauungstrakts und des Immunsystems kommt.

Gemäß US 3,988,483 dient beispielsweise Kreatin als N-Quelle für Wiederkäuer in einem speziellen Futtermittel, das durch Reaktion von Stärke enthaltenden Substanzen mit Nicht-Protein-Stickstoff-Verbindungen, wie u.a. Kreatin erhalten wird.

Unerwarteterweise wurde nun gefunden, dass Kreatin nicht nur beim Menschen und bei Hunden zu einer verbesserten Leistungsfähigkeit der Muskulatur führt, sondern dass der Einsatz von Kreatin bei landwirtschaftlichen Nutztieren, insbesondere bei Hühnern, Schweinen und Lachsen, die Leistung der Tiere verbessern kann, vor allem bei Wegfall von Futtermitteln tierischer Herkunft wie Fleischmehl oder Fischmehl.

Gegenstand der Erfindung ist demnach die Verwendung von Kreatin und/oder von Kreatinsalzen als Futterzusatz für landwirtschaftliche Nutztiere in vorwiegend vegetabilem Futter zur Steigerung der Fleischqualität, Verbesserung des Gewichtszuwachses und Muskelfleischansatzes und/oder Verbesserung des lean body mass-Index und/oder und/oder Steigerung der Legeleistung bei Geflügel.

Kreatin ist eine seit langem bekannte Substanz (The Merck Index, Eleventh Edition, No 2570, 1989) und kommerziell erhältlich oder kann wie beispielsweise in Ullmann's Encyclopedia of Industrial Chemistry, 5. Auflage, Band A 12, 552, VCH-Verlagsgesellschaft, Weinheim (1987) oder in US 2 654 779 beschrieben durch Reaktion von Cyanamid mit Sarkosin leicht hergestellt werden. Andere Herstellungsvarianten sind z.B. aus EP-A-0754 679, das die Reaktion von Cyanamid mit Sarkosinat beschreibt, bekannt.

Die Bezeichnung Kreatin umfasst somit die isolierte Form des natürlich vorkommenden Kreatins und chemisch synthetisierte Formen.

Kreatin kann dabei als solches oder in Form eines Salzes eingesetzt werden. Als Salze eignen sich beispielsweise Kreatinpyruvate der allgemeinen Formel (Kreatin)ₓ(Pyruvat)_{y}(H₂O)ₙ, mit x = 1 bis 100, y = 1 bis 10 und n = 0 bis 10, die in WO 98/28263 beschrieben sind. Weiters eignen sich die aus EP-A-0775 108 bekannten Kreatinsalze , d.h. Kreatincitrat, -maleat, -fumarat, - tartrat oder -malat oder die in WO 98/38183 beschriebenen Kreatinascorbate der Formel (Kreatin)ₓ(Ascorbat)_{y}(H₂O)ₙ, mit x = 1 bis 100, y = 1 bis 100 und n = 0 bis 20. Auch andere Salze wie etwa Kreatin-Phosphorenolpyruvat, Kreatinsuccinate, -formiate und -gluconate, Potassium-, Calcium- oder Natriumkreatin oder Kreatinphosphat, das kommerziell erhältlich ist, eignen sich für die erfindungsgemäße Verwendung. Weiters kommen auch Cyclokreatin und andere literaturbekannte Kreatinanaloge in Frage.
Es können auch Mischungen von Kreatin mit einem oder mehreren der oben genannten Salze oder Mischungen aus einem oder mehreren der erwähnten Salze eingesetzt werden.

Kreatin oder dessen Salze finden bei der Fütterung als Futterzusatz für die unterschiedlichsten Tiere und somit für unterschiedlichste Futterformen Anwendung.

Ein weiterer Gegenstand der Erfindung ist die Verwendung von Kreatin oder von Kreatinsalzen zur Herstellung eines therapeutischen Mittels für Zucht- und Masttiere zur Verbesserung der Embryonalentwicklung, zur Steigerung der Fruchtbarkeit der Muttertiere, der männlichen Fruchtbarkeit und Überlebensrate der Jungtiere, Steigerung der Legeleistung bei Geflügeln und Senkung der infektionsrate, wobei das therapeutische Mittel in vorwiegend vegetabilem Futter als Totalersatz für Fleisch- oder Fischmehl und/oder antimikrobielle Leistungsförderer, Wachstumshormone, sowie Anabolika dient.

Durch die Verwendung von Kreatin als Futterzusatz wird bei Geflügelarten, wie Hühnern, Enten, Gänsen und Truthühnern, eine höhere Zuwachsrate beim Gewicht mit geringerem Futteraufwand erreicht, wobei auch die Zeit in der die entsprechende Gewichtszunahme erzielt wird, gegenüber bisher eingesetzten Fütterungsmethoden mit Tiermehl und antimikrobiellen Leistungsförderern verkürzt ist. Der Mehrzuwachs ergibt sich dabei durch einen erhöhten Proteinansatz ("Fleischzunahme") und nicht durch eine stärkere Verfettung der Tiere, wodurch eine Verbesserung des lean body mass-Index erzielt wird. Weiters wird durch den Zusatz von Kreatin die Zumischung von Wachstumshormonen, anderen Wachstumsfaktoren oder Hormonen oder von hormonähnlichen Substanzen und auch von Anabolika, die bislang zur Erzielung eines verbesserten Fleischzuwachses eingesetzt wurden, überflüssig.

Weitere Vorteile bei der Geflügelfutterergänzung durch Kreatin oder dessen Salze sind eine gesteigerte Eilegeleistung der Hennen, eine Steigerung der Fruchtbarkeit bzw. der Spermaproduktion und -qualität der Hähne, sowie eine Senkung der Infektionsrate durch ein verbessertes Immunsystem.

Ein Gegenstand der Erfindung ist demnach die Verwendung von Kreatin oder von Kreatinsalzen als Futterzusatz für Geflügel zur Steigerung der Fleischqualität, Verbesserung des Gewichtszuwachses und Muskelfleischansatzes, Verbesserung des lean body mass Index, zur Steigerung der Eilegeleistung der Hennen, zur Steigerung der Spermaproduktion und -qualität der Hähne und zur Herstellung eines therapeutischen Mittels zur Senkung der Infektionsrate, wobei das therapeutische Mittel in vorwiegend vegetabilem Futter als Totalersatz für Fleisch- oder Fischmehl und/oder antimikrobielle Leistungsförderer, Wachstumshormone, sowie Anabolika dient.

Bei Schweinen kann ebenfalls die Verwendung von Tiermehl bei der Fütterung gänzlich entfallen. Zweitens kann auch auf den Zusatz von antimikrobiellen Leistungsförderern, wie etwa Antibiotika, verzichtet werden, da Kreatin auch bei Schweinen wachstumsfördernde Eigenschaften aufweist. Zusätzlich wird durch die erfindungsgemäße Verwendung von Kreatin oder Kreatinsalzen eine verbesserte Fruchtbarkeit der weiblichen Tiere, die sich in einer Erhöhung der Brunstzyklen und der Aufnahmebereitschaft zur Trächtigkeit zeigt, erzielt, wodurch u.a. die Zahl der Ferkel pro Wurf erhöht wird. Weitere Vorteile sind eine verbesserte Embryoentwicklung durch Fütterung der Muttertiere mit Kreatin oder Kreatinsalze, verbesserte Spermatogenese bei den männlichen Zuchttieren, sowie eine bessere Gewichtszunahme. Auch die Überlebensrate und das Gedeihen der Ferkel während der Laktation durch Kreatinaufnahme über die Muttermilch des durch Kreatin zugefütterten, optimal versorgten Muttertieres und später durch Kreatinsupplementation der Jungtiere werden gesteigert. Weiters wird eine Senkung der Infektionsrate durch ein verbessertes Immunsystem erzielt.

Ein weiterer Gegenstand der Erfindung ist demnach die Verwendung von Kreatin oder von Kreatinsalzen als Futterzusatz für Schweine zur Steigerung der Fleischqualität, Verbesserung des Gewichtszuwachses und Muskelfleischansatzes und Verbesserung des lean body mass Index und zur Herstellung eines therapeutischen Mittelszur Verbesserung der Embryoentwicklung, Steigerung der Fruchtbarkeit der Muttertiere und Überlebensrate der Jungtiere, Verbesserung der Spermatogenese, sowie zur Senkung der Infektionsrate, wobei das therapeutische Mittel in vorwiegend vegetabilem Futter als Totalersatz für Fleisch- oder Fischmehl und/oder antimikrobielle Leistungsförderer, Wachstumshormone, sowie Anabolika dient..

Bei Zuchtlachsen kann durch die Verwendung von Kreatin oder von Kreatinsalzen als Futterzusatz die Fütterung auf vorwiegend vegetabiler Basis erfolgen, wodurch der Verbrauch an Fischmehl, das aus zumeist pazifischen Kleinfischen gewonnen wird, wesentlich reduziert wird. Ein weiterer Vorteil ist eine Senkung der Infektionsrate durch ein verbessertes Immunsystem.

Ein weiterer Gegenstand der Erfindung ist demnach die Verwendung von Kreatin oder von Kreatinsalzen als Futterzusatz für Zuchtlachse als Ersatz für Fischmehl und/oder antimikrobielle Leistungsförderer.

Kreatin oder Kreatinsalze können aber auch dem Milchersatzpulver für Mastkälber zugesetzt werden, wodurch Milchbestandteile eingespart werden können und eine verbesserte Gewichtszunahme, eine verbesserte Fleischqualität, eine Erhöhung des reinen Muskelfleischanteils (lean body mass)und eine Reduktion des Fettanteils der Kälber, sowie eine Senkung der Infektionsrate durch ein verbessertes Immunsystem und eine verbesserte Futterverwertung erreicht wird.

Die Verwendung von Kreatin oder von Kreatinsalzen als Zusatz für Milchersatzpulver für Mastkälber zur Verbesserung der Gewichtszunahme, zur Verbesserung der Fleischqualität, zur Erhöhung des reinen Muskelfleischanteils und zur Reduktion des Fettanteils der Kälber, sowie zur Verbesserung der Futterverwertung und zur Herstellung eines therapeutischen Mittels zur Senkung der Inektionsrate ist somit auch ein Gegenstand der Erfindung.

Eine weitere Verwendungsmöglichkeit von Kreatin und Kreatinsalzen als Futterzusatz ist Nass- beziehungsweise Dosenfutter für Hunde und Katzen, bei welchem im Herstellungsprozess der im Ausgangsmaterial ursprünglich vorhandene Gehalt an Kreatin reduziert wird.
In diesem Fall wird erstens wieder eine Senkung der Infektionsrate durch ein verbessertes Immunsystem erreicht und neben der Tatsache, dass die Tiere lebendiger und stärker sind, weisen die Tiere zweitens ein deutlich glänzenderes Fell auf.

Kreatin oder dessen Salze können somit den unterschiedlichsten Futterarten zugesetzt werden. Folgende Futterarten sind für den erfindungsgemäßen Zusatz geeignet:
trocken oder nass verabreichtes Mehlfutter, pelletiertes Futter, Expanderfutter, extrudiertes Futter, Futterflocken, Milchersatzpulver, Nass- oder Dosenfutter.

Kreatin oder dessen Salze werden dabei beispielsweise bei der Produktion der Futtermischung, d.h. vor dem Abfüllen und Verpacken in Büchsen u.s.w. als Nahrungsergänzungsmittel zugemischt. Eine weitere Möglichkeit ist der Zusatz nach der Expansion oder Extrusion des Futters, sowie bei der Pelietherstellung.
Der Zusatz von Kreatin erfolgt dabei entweder in Pulverform oder bei wasserlöslichen Salzen in Form einer wässrigen Lösung.

Die dem Futtermittel zugesetzte Menge an Kreatin entspricht bevorzugt der in Dosis-Wirkungs-Versuchen ermittelten Menge bzw. der in Anlehnung an den im Frischfleisch vorhandenen Kreatingehalt ermittelten Menge. Gegebenenfalls kann auch die zwei- bis vierfache Menge zugesetzt werden.

Die Mengen an zugesetztem Kreatin sind dabei von den zu fütternden Tieren abhängig, sodass sie innerhalb eines großen Bereiches schwanken können. Bevorzugte Kreatinmengen liegen im Bereich von 1 bis 50 g/kg, besonders bevorzugt von 1 bis 5g/kg lufttrockenem Futter. Die verabreichte Futtermenge sollte dabei bevorzugt eine Versorgung mit 0.2 bis 0.5 g Kreatin pro kg metabolischem Körpergewicht (G^{0.75}) gewährleisten.

Kreatin und dessen Salze können gegebenenfalls gemeinsam mit üblichen Futtermittelzusätzen, wie Fette, Aminosäuren, Mineralstoffe, Spurenelementen, Vitaminen und Aromastoffe, zugesetzt werden.

### Beispiel 1:

Die Auswirkung von Zusatz von Kreatin im Futtermittel für Masthühner wurde untersucht.
Dabei wurde festgestellt, dass durch den Zusatz von 0,2% an Kreatin (0,2g/kg) zum luftgetrockneten Futter bei 41 Tagen Mastdauer eine Steigerung des Endgewichtes um 4% gegenüber bisherigen Fütterungsmethoden (ohne Kreatinzusatz) erzielt wurde. Dieser Zuwachs an Gewicht wurde nur durch Fleischzunahme, jedoch nicht durch Fettzunahme erreicht (Verbesserung des lean body mass Index), wobei das Fleisch auch eine verbesserte Qualität aufwies.
Der Futtermittelverbrauch sank dabei um etwa 2-3%, gegenüber bisherigen Fütterungsmethoden.

## Patentansprüche

1. Verwendung von Kreatin und/oder von Kreatinsalzen als Futterzusatz für landwirtschaftliche Nutztiere in vorwiegend vegetabilem Futter zur Steigerung der Fleischqualität, Verbesserung des Gewichtszuwachses und Muskelfleischansatzes und/oder Verbesserung des lean body mass-Index und/oder und/oder Steigerung der Legeleistung bei Geflügel.

2. Verwendung von Kreatin und/oder von Kreatinsalzen nach Anspruch 1 für Geflügel zur Steigerung der Fleischquälität, Verbesserung des Gewichtszuwachses und Muskelfleischansatzes und/oder Verbesserung des lean body mass Index und/oder zur Steigerung der Eilegeleistung der Hennen und/oder zur Steigerung der Spermaproduktion und -qualität der Hähne.

3. Verwendung von Kreatin und/oder von Kreatinsalzen nach Anspruch 1 für Schweine zur Steigerung der Fleischqualität, Verbesserung des Gewichtszuwachses und Muskelfleischansatzes und/oder Verbesserung des lean body mass Index.

4. Verwendung von Kreatin und/oder von Kreatinsalzen zur Herstellung eines therapeutischen Mittels für Zucht- und Masttiere zur Verbesserung der Embryonalentwicklung und/oder zur Steigerung der Fruchtbarkeit der Muttertiere und/oder der männlichen Fruchtbarkeit und/oder Überlebensrate der Jungtiere und/oder Senkung der Infektionsrate, wobei das therapeutische Mittel in vorwiegend vegetabilem Futter als Totalersatz für Fleischmehl, Fischmehl und/oder antimikrobielle Leistungsförderer, Wachstumshormone, sowie Anabolika dient.

5. Verwendung von Kreatin und/oder von Kreatinsalzen zur Herstellung eines therapeutischen Mittels nach Anspruch 4 für Geflügel zur Senkung der Infektionsrate, wobei das therapeutische Mittel als Totalersatz für Fleischmehl, Fischmehl und/oder antimikrobielle Leistungsförderer, Wachstumshormone, sowie Anabolika dient.

6. Verwendung von Kreatin und/oder von Kreatinsalzen zur Herstellung eines therapeutischen Mittels nach Anspruch 4 für Schweine zur Verbesserung der Embryoentwicklung und/oder Steigerung der Fruchtbarkeit der Muttertiere und/oder Überlebensrate der Jungtiere und/oder Verbesserung der Spermatogenese der männlichen Tiere und/oder zur Senkung der Infektionsrate, wobei das therapeutische Mittel als Totalersatz für Fleischmehl, Fischmehl und/oder antimikrobielle Leistungsförderer, Wachstumshormone, sowie Anabolika dient.

7. Verwendung von Kreatin und/oder von Kreatinsalzen zur Herstellung eines therapeutischen Mittels nach Anspruch 4 für Mastkälber zur Senkung der Infektionsrate, wobei das therapeutische Mittel dem Milchersatzpulver zugesetzt wird.

8. Verwendung von Kreatin und/oder von Kreatinsalzen als Futterzusatz für Zuchtlachse als Ersatz für Fischmehl und/oder antimikrobielle Leistungsförderer.

9. Verwendung von Kreatin und/oder von Kreatinsalzen als Zusatz für Milchersatzpulver für Mastkälber zur Verbesserung der Gewichtszunahme und/oder zur Verbesserung der Fleischqualität und/oder zur Erhöhung des reinen Muskelfleischanteils und zur Reduktion des Fettanteils und/oder Verbesserung der Futterverwertung.

10. Verwendung von Kreatin und/oder Kreatinsalzen zur Herstellung eines therapeutischen Mittels für Hunde und Katzen, zur Senkung der Infektionsrate, Verbesserung des Immunsystem und/oder Erreichung eines glänzenden Felles, wobei das therapeutische Mittel dem Nass- oder Dosenfutter zugesetzt wird.

11. Verwendung von Kreatin und/oder Kreatinsalzen nach einem der Ansprüche 1 bis 10, **dadurch gekennzeichnet, dass** natürlich vorkommendes Kreatin oder chemisch synthetisierte Formen, Kreatinpyruvate der allgemeinen Formel (Kreatin)ₓ(Pyruvat)_{y}(H₂O)ₙ, mit x = 1 bis 100, y = 1 bis 10 und n = 0 bis 10, d.h. Kreatincitrat, -maleat, -fumarat, - tartrat oder -malat, oder Kreatinascorbate der Formel (Kreatin)ₓ(Ascorbat)_{y}(H₂O)ₙ, mit x = 1 bis 100, y = 1 bis 100 und n = 0 bis 20, Kreatin-Phosphorenolpyruvat, Kreatinsuccinate, -formiate und -gluconate, Potassium-, Calcium- oder Natriumkreatin oder Kreatinphosphat, Cyclokreatin oder Mischungen daraus verwendet werden.

12. Verwendung von Kreatin und/oder Kreatinsalzen als Futterzusatz nach einem der Ansprüche 1 bis 11, **dadurch gekennzeichnet, dass** Kreatin und/oder Kreatinsalze dem Futter als Nahrungsmittelergänzung in Pulverform oder bei wasserlöslichen Salzen in Form einer wässrigen Lösung zugemischt werden.

13. Verwendung nach Anspruch 12, **dadurch gekennzeichnet, dass** Kreatin und/oder Kreatinsalze in einer Menge von 1 bis 50 g/kg lufttrockenem Futter zugesetzt werden.

## Claims

1. Use of creatine and/or creatine salts as feed additives for farm animals in predominantly plant-origin feed for improving meat quality, improving weight gain and per cent muscle meat and/or improving the lean body mass index and/or increasing the laying performance in the case of poultry.

2. Use of creatine and/or creatine salts according to Claim 1 for poultry for increasing meat quality, improving weight gain and per cent muscle meat and/or improving the lean body mass index and/or for increasing the egg laying performance of the hens and/or for increasing sperm production and sperm quality of the cocks.

3. Use of creatine and/or creatine salts according to Claim 1 for pigs for improving the meat quality, improving weight gain and per cent muscle meat and/or improving the lean body mass index.

4. Use of creatine and/or creatine salts for producing a therapeutic agent for breeding animals and fatstock for improving embryo development, and/or for increasing fertility of the mother animals, and/or male fertility and/or survival rate of young animals and/or lowering the infection rate, the therapeutic agent being used in predominantly plant-origin feed as a total substitute for meat and bone meal, fishmeal and/or antimicrobial growth promoters, growth hormones, and anabolics.

5. Use of creative and/or creatine salts for producing a therapeutic agent according to Claim 4 for poultry for lowering the infection rate, the therapeutic agent being used as a total substitute for meat and bone meal, fishmeal and/or antimicrobial growth promoters, growth hormones, and anabolics.

6. Use of creatine and/or creatine salts for producing a therapeutic agent according to Claim 4 for pigs for improving embryo development and/or increasing pigs for improving embryo development and/or increasing the fertility of the mother animals and/or survival rate of the young animals and/or improving the spermatogenesis of the male animals and/or for lowering the infection rate, the therapeutic agent being used as a total substitute for meat and bone meal, fishmeal and/or antimicrobial growth promoters, growth hormones, and anabolics.

7. Use of creatine and/or creatine salts for producing a therapeutic agent according to Claim 4 for growing calves for lowering the infection rate, the therapeutic agent being added to the powdered milk replacer.

8. Use of creatine and/or creatine salts as feed additive for breeding salmon as substitute for fishmeal and/or antimicrobial growth promoters.

9. Use of creatine and/or creatine salts as additive for powdered milk replacer for growing calves to improve the weight gain and/or improve meat quality and/or to increase the lean body mass and to reduce the fat content and/or to improve feed utilization.

10. Use of creatine and/or creatine salts for producing a therapeutic agent for dogs and cats, to lower the infection rate, improve the immune system and/or achieve a glossy coat, the therapeutic agent being added to the wet or canned food.

11. Use of creatine and/or creatine salts as feed additive according to one of Claims 1 to 10, **characterized in that** naturally occurring creatine or chemically synthesized forms, creatine pyruvates of the general formula (creatine)ₓ(pyruvate)_{y}(H₂O)ₙ, where x = 1 to 100, y = 1 to 10 and n = 0 to 10, that is to say creatine citrate, creatine maleate, creatine fumarate, creatine tartrate or creatine malate, or creatine ascorbate of the formula (creatine)ₓ(ascorbate)_{y}(H₂O)ₙ, where x = 1 to 100, y = 1 to 100 and n = 0 to 20, creatine phosphorenolpyruvate, creatine succinates, creatine formates and creatine gluconates, potassium creatine, calcium creatine or sodium creatine or creatine phosphate, cyclocreatine or mixtures thereof are used.

12. Use of creatine and/or creatine salts as feed additive according to one of Claims 1 to 11, **characterized in that** creatine and/or creatine salts are added to the feed as food supplement in powder form or in the case of water soluble salts in the form of an aqueous solution.

13. Use according to Claim 12, **characterized in that** creatine and/or creatine salts are added in an amount of 1 to 50 g/kg of air-dry feed.

## Revendications

1. Utilisation de créatine et/ou de sels de créatine comme élément nutritif complémentaire d'aliments pour des animaux d'élevage dans une nourriture principalement végétale afin d'augmenter la qualité de la viande, d'améliorer l'augmentation de poids ainsi que la prise de masse musculaire et/ou d'améliorer l'indice du poids maigre et/ou d'augmenter la prolificité des volailles.

2. Utilisation de créatine et/ou de sels de créatine selon la revendication 1 pour des volailles afin d'augmenter la qualité de la viande, d'améliorer l'augmentation de poids ainsi que la prise de masse musculaire et/ou d'améliorer l'indice du poids maigre et/ou d'augmenter la ponte des poules et/ou d'augmenter la production ainsi que la qualité des spermatozoïdes des coqs.

3. Utilisation de créatine et/ou de sels de créatine selon la revendication 1 pour des porcs afin d'augmenter la qualité de la viande, d'améliorer l'augmentation de poids ainsi que la prise de masse musculaire et/ou d'améliorer l'indice du poids maigre.

4. Utilisation de créatine et/ou de sels de créatine pour la préparation d'un agent thérapeutique destiné à des animaux d'élevage et des animaux à l'engrais afin d'améliorer le développement embryonnaire et/ou d'augmenter la fécondité des mères et/ou la fertilité des mâles et/ou le taux de survie des jeunes animaux et/ou de diminuer le taux d'infection, sachant que l'agent thérapeutique sert, dans une nourriture principalement végétale, de produit de substitution total pour la farine de viande, la farine de poisson et/ou des facteurs de croissance antimicrobiens, des hormones de croissance ainsi que des anabolisants.

5. Utilisation de créatine et/ou de sels de créatine pour la préparation d'un agent thérapeutique selon la revendication 4 destiné à des volailles afin de diminuer le taux d'infection, sachant que l'agent thérapeutique sert de produit de substitution total pour la farine de viande, la farine de poisson et/ou des facteurs de croissance antimicrobiens, des hormones de croissance ainsi que des anabolisants.

6. Utilisation de créatine et/ou de sels de créatine pour la préparation d'un agent thérapeutique selon la revendication 4 destiné à des porcs afin d'améliorer le développement embryonnaire et/ou d'augmenter la fécondité des mères et/ou le taux de survie des jeunes animaux et/ou d'améliorer la spermatogenèse des mâles et/ou de diminuer le taux d'infection, sachant que l'agent thérapeutique sert de produit de substitution total pour la farine de viande, la farine de poisson et/ou des facteurs de croissance antimicrobiens, des hormones de croissance ainsi que des anabolisants.

7. Utilisation de créatine et/ou de sels de créatine pour la préparation d'un agent thérapeutique selon la revendication 4 destiné à des veaux à l'engrais, afin de diminuer le taux d'infection, sachant que l'agent thérapeutique est ajouté à la poudre de substitution du lait.

8. Utilisation de créatine et/ou de sels de créatine comme élément nutritif complémentaire d'aliments destinés à des saumons d'élevage comme produit de substitution pour la farine de poisson et/ou des facteurs de croissance antimicrobiens.

9. Utilisation de créatine et/ou de sels de créatine comme complément pour de la poudre de substitution du lait destinée à des veaux à l'engrais afin d'améliorer la prise de poids et/ou d'améliorer la qualité de la viande et/ou d'augmenter la part musculaire pure et de diminuer la part de graisse et/ou d'améliorer l'utilisation des aliments.

10. Utilisation de créatine et/ou de sels de créatine pour la préparation d'un agent thérapeutique destiné à des chiens et des chats, afin de diminuer le taux d'infection, d'améliorer le système immunitaire et/ou d'obtenir un poil brillant, sachant que l'agent thérapeutique est ajouté à des aliments humides ou à des aliments en conserve.

11. Utilisation de créatine et/ou de sels de créatine selon l'une des revendications 1 à 10, **caractérisée en ce que** de la créatine naturellement présente ou des formes chimiquement synthétisées, des pyruvates de créatine de formule générale (créatine)ₓ(pyruvate)_{y}(H₂O)ₙ avec x = 1 à 100, y = 1 à 10 et n = 0 à 10, c'est-à-dire du citrate de créatine, du maléate de créatine, du fumarate de créatine, du tartrate de créatine ou du malate de créatine, ou des ascorbates de créatine de formule (créatine)ₓ(ascorbate)_{y}(H₂O)ₙ avec x = 1 à 100, y = 1 à 100 et n = 0 à 20, du phosphorenol-pyruvate de créatine, des succinates de créatine, des formiates de créatine et des gluconates de créatine, de la créatine de potassium, de calcium ou de sodium ou de la créatine phosphate, de la cyclocréatine ou des mélanges de ceux-ci sont utilisés.

12. Utilisation de créatine et/ou de sels de créatine comme élément nutritif complémentaire d'aliments selon l'une des revendications 1 à 11, **caractérisée en ce que** la créatine et/ou les sels de créatine sont mélangés à des aliments comme complément alimentaire sous forme de poudre ou dans des sels solubles sous forme d'une solution aqueuse.

13. Utilisation selon la revendication 12, **caractérisée en ce que** la créatine et/ou les sels de créatine sont ajoutés dans une quantité allant de 1 à 50 g/kg d'aliments desséchés.
